# EUROPEAN PATENT SPECIFICATION

(11) **EP 3 605 507 B1**
(45) Date of publication and mention of the grant of the patent: **22.02.2023**
(21) Application number: 18774888.4
(22) Date of filing: 30.03.2018
(51) Int. Cl.: G09F 3/04, B29C 45/14, B32B 27/00, B32B 27/32, G09F 3/02, B65D 23/00, C08J 7/04

(54) **LABEL FOR IN-MOLD MOLDING AND LABELED RESIN MOLDED ARTICLE**
ETIKETT ZUM IN-MOLD-FORMEN UND ETIKETTIERTER HARZFORMKÖRPER
ÉTIQUETTE DESTINÉE AU MOULAGE DANS LE MOULE ET ARTICLE MOULÉ EN RÉSINE ÉTIQUETÉ

(30) Priority: 31.03.2017 JP 2017072025
(43) Date of publication of application: 05.02.2020
(73) Proprietor: Yupo Corporation, Tokyo 101-0062 (JP)
(72) Inventor: IKARASHI, Takuya, Kamisu-shi Ibaraki 314-0102 (JP); NAKAMURA, Kou, Kamisu-shi Ibaraki 314-0102 (JP)
(74) Representative: Zimmermann & Partner Patentanwälte mbB
(86) International application number: PCT/JP2018/014000
(87) International publication number: WO 2018/182026

(56) References cited:
- WO-A1-2006/054725
- WO-A1-2018/003803
- WO-A1-2018/062214
- WO-A2-2013/051017
- JP-A- S6 237 189
- JP-A- H07 144 486
- JP-A- 2014 224 882
- US-A1- 2003 148 132
- US-A1- 2003 203 166
- DATABASE WPI Week 199649 1996 Thomson Scientific, London, GB; AN 1996-494528 XP002800925, & JP H08 254956 A (OJI YUKA GOSEISHI KK) 1 October 1996 (1996-10-01)

## Description

### Technical Field

The present invention relates to an in-mold molding label and a labeled resin molded article to which the label is affixed.

### Background Art

Conventionally, as one of the methods for affixing a label to a resin molded article, in-mold molding is used. In the in-mold molding, when a resin molded article is molded in a mold, a label is previously arranged inside the mold, and the affixing of the label to the resin molded article is performed simultaneously with the molding of the molten resin. The label used in the in-mold molding is referred to as an in-mold molding label (a label for in-mold molding), and from the viewpoint of decorativeness and design properties, a printed layer is formed on the in-mold molding label by subjecting the in-mold molding label to printing.

In the in-mold molding, the resin constituting the resin molded article, in a molten state, comes into contact with the resin film constituting the label. Then, the label and the resin molded article are affixed to each other followed by cooling and solidification to mold a labeled container in which the label and the resin molded article are affixed and integrated with each other. Therefore, the height difference by the label from the resin molded article is suppressed, and the label is reliably affixed can be molded.

For the in-mold molding label, various techniques for peeling some of the layers constituting the label after affixing the label to a resin molded article have also been proposed so far. When part of the label affixed to the resin molded article is peelable, it is possible to provide an in-mold molding label excellent in design properties, such as it is possible to display each of printed information originally printed on the surface of the label, and printed information appearing after peeling part of the label, differently before and after peeling.

As such techniques, for example, Patent Literature 1 discloses an in-mold molding label in which a plurality of printed resin films are laminated via peelable ultraviolet curable and/or electron beam curable pseudo-adhesive resin layers. In addition, Patent Literature 2 proposes an in-mold molding label comprising a base layer (A) containing a thermoplastic resin, a layer (B) allowing interlayer peeling, and a heat seal layer (C) in this order. Here, the label can be peeled by the breakage of the layer (B) allowing interlayer peeling, itself. Document WO 2013/051017 A2 describes a polyester film based laminate comprising an outer polyethylene layer and an inner polyethylene layer. Further, a primer layer of polyethylene imine may be provided.
US 2003/203166 A1 describes a shrinkage polymeric film where a specific composition comprising inter alia styrene-acrylic resin is coated on a layer of polyethylene imine.

### Citation List

### Patent Literature

Patent Literature 1: Japanese Patent Laid-Open No. 2005-91594
Patent Literature 2: Japanese Patent Laid-Open No. 2003-295767

### Summary of Invention

### Technical Problem

In the in-mold molding labels described in Patent Literatures 1 and 2, in order to peel part of the layers constituting the label, a layer for peeling part of the label, such as the pseudo-adhesive resin layer or the layer allowing interlayer peeling, is separately needed as described above.

Further, in Patent Literature 2, the heat seal layer is needed for the adhesion between the label and a resin molded article. In other words, in order to peel part of the label and adhere the label and the resin molded article to each other, the steps of manufacturing the layer for peeling part of the label and the heat seal layer occur, and the working process of the manufacture of the in-mold molding label are complicated correspondingly, and cost is also required correspondingly.

The present invention has been made in view of such background art. In other words, the present invention provides an in-mold molding label in which part of the layers constituting the label can be peeled, and the adhesiveness between the label and a resin molded article is maintained, even without a layer for peeling and a heat seal layer being necessarily provided, and a labeled resin molded article to which the label is affixed.

Achieving not only the object here, but functions and effects derived from configurations shown in Description of Embodiments described later, and not obtained by conventional art can also be regarded as other objects of the present invention.

### Solution to Problem

The present inventors have studied diligently over and over in order to solve the problems, and as a result found that the problems are solved by adopting an in-mold molding label comprising a substrate layer (A) containing a thermoplastic resin; an ink-receiving layer (B) containing a polyethylenimine-based polymer; and a printed layer (C) formed using a printing method and containing a polyethylene-based resin as a main component, the printed layer (C) containing 50% by mass or more of the polyethylene-based resin; in this order, wherein the ratio between the thickness of the ink-receiving layer (B) and the thickness of the printed layer (C) is 1:20 to 2:1, and completed the present invention.

Specifically, the present invention provides various specific modes shown below.
[1] An in-mold molding label comprising:
   a substrate layer (A) containing a thermoplastic resin;
   an ink-receiving layer (B) containing a polyethylenimine-based polymer; and
   a printed layer (C) formed using a printing method and containing a polyethylene-based resin as a main component, the printed layer (C) containing 50% by mass or more of the polyethylene-based resin,
   in this order, wherein the ratio between the thickness of the ink-receiving layer (B) and the thickness of the printed layer (C) is 1:20 to 2:1.
[2] The in-mold molding label according to [1], wherein the thermoplastic resin is at least one thermoplastic resin selected from the group consisting of olefin-based resins, styrene-based resins, ester-based resins, amide-based resins, and polycarbonates.
[3] The in-mold molding label according to [1] or [2], wherein the polyethylene-based resin comprises an ethylene-methacrylic acid copolymer.
[4] The in-mold molding label according to any of [1] to [3], further comprising a second printed layer (c) and a second ink-receiving layer (b) in this order on a surface of the substrate layer (A) opposite to a side on which the ink-receiving layer (B) is provided.
[5] A labeled resin molded article obtained by affixing and integrating the in-mold molding label according to any of [1] to [4] with a resin molded article by in-mold molding.
[6] The labeled resin molded article according to [5], wherein the resin molded article comprises at least one thermoplastic resin selected from polyethylene-based resins and polystyrene resins.
[7] The labeled resin molded article according to [5] or [6], wherein when the in-mold molding label is peeled from the labeled resin molded article, the in-mold molding label peels at an interface between the substrate layer (A) and the ink-receiving layer (B) or an interface between the ink-receiving layer (B) and the printed layer (C), and the resin molded article has at least the printed layer (C) on a resin molded article surface after the in-mold molding label is peeled.

### Advantageous Effects of Invention

By having the configuration, the in-mold molding label of the present invention can ensure moderate adhesion between the ink-receiving layer and the substrate layer or the like (lower peel strength) while maintaining the adhesiveness between the ink-receiving layer and the printed layer. In other words, according to the present invention, it is possible to provide an in-mold molding label that can be peeled at the interface between the substrate layer (A) and the ink-receiving layer (B) or the interface between the ink-receiving layer (B) and the printed layer (C) from a state in which the label adheres to a resin molded article. Thus, the label can be peeled from the resin molded article with the adhesion between the label and the resin molded article maintained high, and thus printed information previously printed on the surface side of the label to be in contact with the resin molded article can be transferred from the label side to the resin molded article. As a result, the printed information can be displayed on the resin molded article side.

In addition, in the in-mold molding label of the present invention, the peeling of the substrate layer can be freely performed at any timing from container molding to disposal, printed information can be displayed on each of the substrate layer and the surface of the printed layer, and the display area can be increased. When the in-mold molding label is peeled from the labeled resin molded article, the in-mold molding label peels at the interface between the substrate layer (A) and the ink-receiving layer (B) or the interface between the ink-receiving layer (B) and the printed layer (C), and therefore the printed layer (C) remains on the container surface side. Therefore, when the in-mold molding label is peeled, the printed information can be visually recognized on the container surface. In this manner, the in-mold molding label of the present invention can display not only the printed information provided on the substrate layer, but also different new printed information provided on the printed layer, after the peeling of the substrate layer.

Further, in the in-mold molding label of the present invention, it is difficult to reaffix the substrate layer onto the ink-receiving layer again after peeling the substrate layer, and therefore labeled resin molded article forgery prevention and reuse prevention can also be promoted. In addition, the substrate layer peeled from the in-mold molding label of the present invention can also be secondarily used for a coupon ticket, an entry ticket, or the like, and the printed information on the printed layer can also be printed information (for example, an ornamental code number, a bar code, a lot, or fortune-telling) that can be used by only a product purchaser. In addition, processing in which perforations are provided in part of the label so that the label can be cut can also be combined.

### Brief Description of Drawings

[Fig. 1] Fig. 1 is a cross-sectional view of one mode of the in-mold molding label of the present invention.
[Fig. 2] Fig. 2 is a cross-sectional view of one mode of the labeled resin molded article of the present invention obtained by affixing the in-mold molding label in Fig. 1 to a resin molded article.
[Fig. 3] Fig. 3 is a cross-sectional view showing a state in which the labeled resin molded article in Fig. 2 undergoes interfacial peeling.
[Fig. 4] Fig. 4 is a perspective view schematically showing the labeled resin molded article of the present invention.
[Fig. 5] Fig. 5 is a cross-sectional view of another mode of the in-mold molding label of the present invention.
[Fig. 6] Fig. 6 is a cross-sectional view of another mode of the labeled resin molded article of the present invention obtained by affixing the in-mold molding label shown in Fig. 5 to a resin molded article.
[Fig. 7] Fig. 7 is a cross-sectional view of another mode of the in-mold molding label of the present invention.

### Description of Embodiments

Embodiments of the present invention will be described below with reference to the drawings. The following embodiments are illustrations for explaining the present invention, and the present invention is not limited to only the embodiments. Positional relationships such as top, bottom, left, and right are hereinafter based on the positional relationships shown in the drawings unless otherwise noted. The dimensional ratios in the drawings are not limited to the ratios shown.

As used herein, for example, the description of the numerical value range "1 to 100" includes both the lower limit value "1" and the upper limit value "100". The same applies to the description of other numerical value ranges.

As used herein, (meth)acrylic acid includes both acrylic acid and methacrylic acid.

As used herein, the description "main component" refers to a component whose content is highest on a mass basis, among components contained in a composition of interest.

### [Configuration of In-Mold Molding Label]

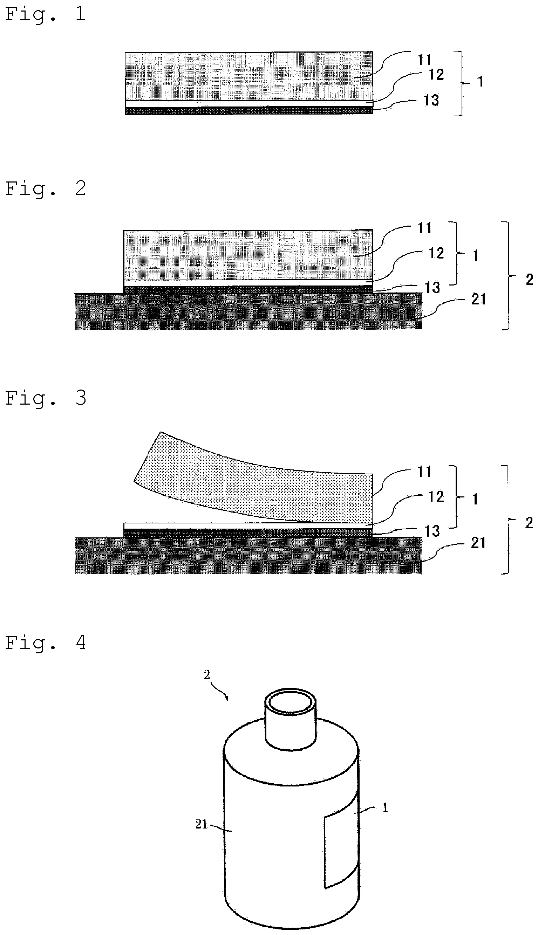

The in-mold molding label of the present invention comprises a substrate layer (A), an ink-receiving layer (B), and a printed layer (C). Fig. 1 is a diagram showing one embodiment of the in-mold molding label of the present invention, and an in-mold molding label 1 is one laminated by a substrate layer (A) 11, an ink-receiving layer (B) 12, and a printed layer (C) 13 so as to have them in this order. As shown in Fig. 3, in the in-mold molding label 1 of the present invention, peeling is possible at the interface between the substrate layer (A) 11 and the ink-receiving layer (B) 12.

In the in-mold molding label 1, the substrate layer (A) 11, the ink-receiving layer (B) 12, and printed layer (C) 13 are laminated adjacently in this order. Examples of specific configurations in which the in-mold molding label of the present invention has other layers will be described later.

The thickness of the entire in-mold molding label of the present invention is preferably 20 µm or more, more preferably 50 µm or more, from the viewpoint of heat insulating properties for preventing heat received from a molten resin from escaping into a mold. On the other hand, when the stiffness is too high, the substrate layer and the ink-receiving layer tend to peel easily during usual transport and use, and therefore the thickness of the entire in-mold molding label of the present invention is preferably 160 µm or less, more preferably 140 µm or less.

### [Substrate Layer (A)]

The substrate layer (A) contains a thermoplastic resin. As shown in Fig. 1, in the in-mold molding label 1, the printed layer (C) 13 is provided on the substrate layer (A) 11 with the ink-receiving layer (B) 12 sandwiched therebetween. The substrate layer (A) 11 is a layer that at least supports the printed layer (C) 13 and the ink-receiving layer (B) 12 and provides the in-mold molding label 1 with such rigidity (resilience) as to allow handling in printing or processing. In addition, as shown in Fig. 3 and Fig. 4, in a state in which the printed layer (C) 13 is heat-sealed to a resin molded article 21, the substrate layer (A) 11 is present on the outer surface of a labeled resin molded article 2 and also functions as a protective layer for the printed layer (C) 13 and the ink-receiving layer (B) 12. As described above, the substrate layer (A) 11 can peel at the interface between the substrate layer (A) 11 and the ink-receiving layer (B) 12, and therefore after peeling, the function as the protective layer is lost.

The substrate layer (A) 11 itself may be a single-layer structure or a multilayer structure of two or more layers. When the substrate layer (A) 11 itself is a multilayer structure of two or more layers, the layers may be composed of the same component or may be composed of different components respectively.

The substrate layer (A) 11 contains a thermoplastic resin and usually comprises a film sheet of a thermoplastic resin, and this film may be nonstretched or stretched and may be a single layer or a multilayer.

### (Thermoplastic Resin)

The type of thermoplastic resin used for the substrate layer (A) 11 is not particularly limited. Examples thereof include olefin-based resins such as high density polyethylene, medium density polyethylene, low density polyethylene, polypropylene, propylene-based copolymerized resins, polymethyl-1-pentene, and ethylene-cyclic olefin copolymers; styrene-based resins such as atactic polystyrene, syndiotactic polystyrene, and styrene-maleic acid copolymers; ester-based resins such as polyethylene terephthalate, polyethylene terephthalate isophthalate, polybutylene terephthalate, polybutylene succinate, polybutylene adipate, and polylactic acid; functional group-containing polyolefin resins such as ethylene-vinyl acetate copolymers, ethylene-acrylic acid copolymers, maleic acid-modified polyethylene, and maleic acid-modified polypropylene; amide-based resins such as nylon-6 and nylon-6,6; and polycarbonates, which are capable of film molding. From among these resins, one can be used, or two or more can be mixed and used.

Among these thermoplastic resins, from the viewpoint of being excellent in film processability, at least one thermoplastic resin selected from the group consisting of olefin-based resins, styrene-based resins, ester-based resins, amide-based resins, and polycarbonates is preferred, olefin-based resins or functional group-containing olefin-based resins are more preferred, and olefin-based resins are particularly preferably used.

More specific examples of the olefin-based resins include homopolymers composed of one of olefin monomers such as ethylene, propylene, butylene, pentene, hexene, octene, butadiene, isoprene, chloroprene, methyl-1-pentene, and cyclic olefins, and copolymers composed of two or more of the olefin monomers. Among them, polyethylene-based resins are preferred.

More specific examples of the functional group-containing olefin-based resins include copolymers of one or more of the olefin monomers and one or more of monomers copolymerizable with the olefin-based monomers.

Examples of the monomers copolymerizable with the olefin-based monomers include styrenes such as styrene and α-methylstyrene; vinyl carboxylate esters such as vinyl acetate, vinyl propionate, vinyl butyrate, vinyl pivalate, vinyl caproate, vinyl laurate, vinyl stearate, vinyl benzoate, vinyl butylbenzoate, and vinyl cyclohexanecarboxylate; unsaturated carboxylic acids and acid anhydrides thereof such as (meth)acrylic acid, maleic acid, fumaric acid, and maleic anhydride; unsaturated carboxylates such as methyl (meth)acrylate, ethyl (meth)acrylate, butyl (meth)acrylate, glycidyl (meth)acrylate, monoethyl maleate ester, diethyl maleate ester, monomethyl fumarate ester, dimethyl fumarate ester, monomethyl itaconate ester, and diethyl itaconate ester; unsaturated carboxylic acid amides such as (meth)acrylamide, maleic acid monoamide, maleic acid diamide, maleic acid-N-monoethylamide, maleic acid-N,N'-diethylamide, maleic acid-N-monobutylamide, maleic acid-N,N'-dibutylamide, fumaric acid monoamide, fumaric acid diamide, fumaric acid-N-monoethylamide, fumaric acid-N,N'-diethylamide, fumaric acid-N-monobutylamide, fumaric acid-N,N'-dibutylamide, maleimide, N-butylmaleimide, and N-phenylmaleimide; and vinyl ethers such as methyl vinyl ether, ethyl vinyl ether, propyl vinyl ether, butyl vinyl ether, cyclohexyl vinyl ether, benzyl vinyl ether, and phenyl vinyl ether.

The functional group-containing olefin-based resins may be hydrolyzed by acids or bases to convert the functional groups derived from vinyl carboxylate esters, unsaturated carboxylic acids, unsaturated carboxylates, and unsaturated carboxylic acid amides into hydroxyl groups, carboxylic acids, or metal carboxylates.

The olefin-based resins or functional group-containing olefin-based resins can also be graft-modified. Examples of the graft modification include a method of reacting an unsaturated carboxylic acid or a derivative thereof in the presence of an oxidant such as a peracid and a metal salt thereof such as peracetic acid, persulfuric acid, or potassium persulfate; or ozone.

The graft modification ratio is usually 0.005 to 10% by mass, preferably 0.01 to 5% by mass, based on the olefin-based resin or the functional group-containing olefin-based resin.

The film constituting the substrate layer (A) 11 may contain a filler such as an inorganic powder or an organic powder. Examples of the filler include inorganic powders such as heavy calcium carbonate, light calcium carbonate, calcined clay, silica, diatomaceous earth, talc, titanium oxide, barium sulfate and alumina, and organic powders such as polyethylene terephthalate, polybutylene terephthalate, polycarbonates, nylon-6, nylon-6,6, nylon-6, cyclic olefins, polystyrene and polymethacrylates.

The transparency of the substrate layer (A) 11 changes depending on the content of these fillers. The substrate layer (A) 11 is transparent when it contains substantially no filler, or the transparency decreases as its content increases. Using this, the printed information of the printed layer (C) 13 can be hidden or adjusted in a semi-see-through or see-through state.

The content of the filler is usually 5 to 60% by mass, preferably 20 to 50% by mass.

The substrate layer (A) 11 can be fillerless, containing substantially no filler such as an inorganic powder or an organic powder. Here, "containing substantially no" means that the content of the filler is 3.0% by mass or less, preferably 1.0% by mass or less, more preferably 0.5% by mass or less, and further preferably 0.01% by mass in terms of solid content based on the total amount of the substrate layer (A) 11. When the filler content of the substrate layer (A) 11 is in the range, the substrate layer (A) 11 is excellent in transparency, and, for example, the printed contents of the printed layer (C) 13 can be clearly visually recognized even without peeling the substrate layer (A) 11.

On the other hand, in the present invention, the substrate layer (A) 11 can be peeled between the substrate layer (A) 11 and the ink-receiving layer (B) 12 with the printed layer (C) 13 affixed to the resin molded article, and therefore even when the substrate layer (A) 11 contains the filler, and the substrate layer (A) 11 lacks transparency, the printed contents of the printed layer (C) 13 can be visually recognized by peeling the substrate layer (A) 11 between the substrate layer (A) 11 and the ink-receiving layer (B) 12.

### (Additive)

The substrate layer (A) 11 may contain a known additive as needed, in addition to the thermoplastic resin. Examples of the additive include heat stabilizers, antistatic agents, antioxidants, ultraviolet stabilizers, dispersing agents, and lubricants. The content of the additive in the substrate layer (A) 11 is not particularly limited but is preferably 0.1 to 10 parts by mass, more preferably 0.5 to 5 parts by mass, with the mass of the substrate layer (A) 11 being 100 parts by mass.

### (Thickness of Substrate Layer (A))

The thickness of the substrate layer (A) 11 is not particularly limited but is preferably 20 to 200 µm, more preferably 30 to 150 µm, and further preferably 40 to 100 µm. When the thickness of the substrate layer (A) 11 is equal to or more than the lower limit value of the range, moderate rigidity can be provided to the in-mold molding label 1 to prevent the occurrence of wrinkling in forming the printed layer (C) 13, and the label is easily fixed at the desired position at the time of insertion into a mold. When the thickness of the substrate layer (A) 11 is equal to or less than the upper limit value of the range, a decrease in the strength of the boundary portion of the in-mold molding label 1 in the obtained resin molded article can be prevented, breakage from a label end of the in-mold molding label 1 can be prevented, and a decrease in the transparency of the in-mold molding label 1 can be prevented.

As used herein, the thickness of each layer constituting the in-mold molding label 1 is a value obtained by observing a cross section by a microscope and multiplying the thickness of the entire in-mold molding label 1 by the thickness ratio of the observed layer.

### [Ink-Receiving Layer (B)]

As shown in Fig. 1, the ink-receiving layer (B) 12 is a layer that is interposed between the printed layer (C) 13 and the substrate layer (A) 11 and receives the printing of the printed layer (C) 13, in the in-mold molding label 1. By the melting of the printed layer (C) 13, the affinity of the printed layer (C) 13 for the ink-receiving layer (B) 12 improves, and the close adhesion of the layers to each other increases.

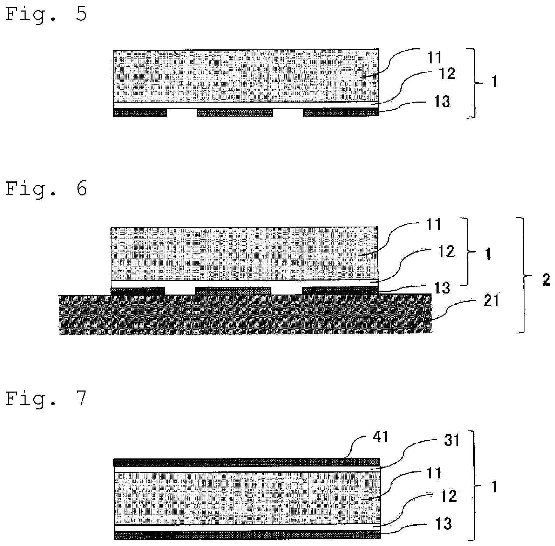

For example, when the printed layer (C) 13 is not provided on the entire surface of the ink-receiving layer (B) 12 as shown in Fig. 5, that is, when the printed layer (C) 13 is provided only on part of the ink-receiving layer (B) 12, the molten resin constituting the resin molded article 21, and the ink-receiving layer (B) 12 in the portions not covered with the printed layer (C) 13 come into contact with each other in a mold in in-mold molding. At this time, as shown in Fig. 6, the ink-receiving layer (B) melted by the heat of the molten resin is in the form of being pseudo-adhered to the molten resin so as to fill the gaps between the partially or intermittently provided printed layers (C) 13, due to pressure during the in-mold molding, and solidifies after cooling, to contribute to pseudo-adhesion between the resin molded article 21 and the in-mold molding label 1. In other words, the ink-receiving layer (B) 12 and the printed layer (C) 13 are preferably in direct contact with each other.

The ink-receiving layer (B) 12 itself may be a single-layer structure or a multilayer structure of two or more layers. When the ink-receiving layer (B) 12 itself is a multilayer structure of two or more layers, the layers may be composed of the same component or may be composed of different components respectively.

When the ink-receiving layer (B) 12 contains a polyethylenimine-based polymer, the peel strength between the substrate layer (A) 11 and the ink-receiving layer (B) 12 can be set lower than the peel strength between the printed layer (C) 13 and the resin molded article 21. In addition, the peel strength between the ink-receiving layer (B) 12 and the printed layer (C) 13 can be set lower than the peel strength between the printed layer (C) 13 and the resin molded article 21. Either one of these mechanisms achieves the transfer of the printed layer (C) 13 from the label 1 side to the resin molded article 21 side in peeling the label.

The polyethylenimine-based polymer is a watersoluble polymer obtained by polymerizing ethylenimine, and is a polymer having a branched structure comprising primary, secondary, and tertiary amines in the molecular skeleton, rather than a perfect linear polymer. In the case of polyethylenimine, a primary amine is at both ends of the molecular chain, and other nitrogen atoms constitute a secondary amine. When a modifier or a crosslinking agent is allowed to act on polyethylenimine, mainly the secondary amine reacts to produce a tertiary amine. In this manner, the polyethylenimine-based resin is rich in reactivity.

Examples of functional groups that react with the primary to tertiary amines of polyethylenimine include aldehyde compounds, alkyl halide compounds, isocyanate compounds, epoxy compounds such as epichlorohydrin, cyanamide compounds, guanidine compounds, urea, carboxylic acid compounds, cyclic acid anhydride compounds, and acyl halide compounds. A compound having one of these functional groups in the molecule can be used as the modifier, and a compound having a plurality of these functional groups in the molecule can be used as the crosslinking agent respectively, and the provision of water resistance and solvent resistance to the polyethylenimine-based resin, the adjustment of peel strength with the substrate layer (A) or the printed layer (C), and the like are possible.

Examples of the polyethylenimine-based polymer include polyethylenimine-based polymers such as polyethylenimine modified with an alkyl having 1 to 12 carbon atoms, poly(ethylenimine-urea), an ethylenimine adduct of poly(ethylenimine-urea), polyamine polyamides, ethylenimine adducts of polyamine polyamides, and epichlorohydrin adducts of polyamine polyamides, in addition to polyethylenimine.

In the polyethylenimine-based polymer, from the viewpoint of adjusting the expiration date of the coating liquid made, reactivity, and peel strength with the substrate layer (A) or the printed layer (C), it is preferred that the molar ratio of the primary amino group to the total amount of amino groups is 0.01 to 0.1%, the molar ratio of the secondary amino group is 1 to 99.5%, and the molar ratio of the tertiary amino group is 0.1 to 10%. Here, the molar ratio is the ratio of the number of moles of each amino group to the total number of moles of the amino groups, the primary amino group, the secondary amino group, and the tertiary amino group, of polyethylenimine.

The number average molecular weight of the polyethylenimine-based polymer is usually 200 to 100,000, preferably 300 to 70,000. The viscosity (mPa·s-25°C) is usually 200 to 150,000, preferably 10,000 to 100,000, and the polyethylenimine-based polymer is diluted with water and appropriately adjusted at a viscosity at which it is easily handled. For the polyethylenimine-based polymer, those having properties such as water solubility, organic solvent solubility, and water dispersibility can be used.

As the polyethylenimine-based polymer, commercial products can be used, and, for example, EPOMIN (registered trademark, manufactured by NIPPON SHOKUBAI CO., LTD., product numbers SP-003, SP-006, SP-012, SP-018, SP-200, HM-2000, and P-1000) can be used.

A product obtained by the ring-opening polymerization of ethylenimine as a raw material by a conventionally known method can also be used. At this time, ethylenimine is reacted with a base amine such as ethylenediamine, diethylenetriamine, or monoethanolamine in the presence of an acid catalyst such as hydrochloric acid, sulfuric acid, or para-toluenesulfonic acid. The obtained product is generally referred to as polyethylenimine, and a copolymer of base amine-derived ethylenediamine, DETA, or monoethanolamine and ethylenimine can be produced.

The ink-receiving layer (B) 12 may also contain an additive known in the industry. Examples of the additive contained in the ink-receiving layer (B) 12 can include antistatic agents, plasticizers, antioxidants, and ultraviolet absorbing agents. The content of the additive in the ink-receiving layer (B) 12 is not particularly limited but is preferably 0.1 to 10 parts by mass, more preferably 0.5 to 5 parts by mass, based on the total amount of the ink-receiving layer (B).

### (Thickness of Ink-Receiving Layer)

The thickness of the ink-receiving layer (B) 12 is not particularly limited but is preferably 0.01 to 10 µm, more preferably 0.03 to 5 µm, further preferably 0.05 to 3 µm, and particularly preferably 0.1 to 1 µm. When the thickness of the ink-receiving layer (B) 12 is equal to or more than the lower limit value of the range, the ink-receiving layer (B) 12 melts together with the printed layer (C) 13 by the heat of the molten resin of the resin molded article 21 during in-mold molding, and the resin molded article 21 and the in-mold molding label 1 easily fuse with each other, and sufficient adhesiveness tends to be obtained. When the thickness of the ink-receiving layer (B) is equal to or less than the upper limit value of the range, the occurrence of the curling of the in-mold molding label 1 is prevented, and the formation of the printed layer (C) 13 on the ink-receiving layer (B) 12, and fixing to a mold are easy.

### [Peel strength between Substrate Layer and Ink-Receiving Layer]

When the ink-receiving layer (B) 12 contains the polyethylenimine-based polymer as described above, the peel strength between the substrate layer (A) 11 or the like and the ink-receiving layer (B) 12 can be moderately lowered.

The peel strength can be obtained, for example, by cutting the labeled resin molded article 2 to a width (MD direction) of 15 mm and a length (TD direction) of 110 mm, and performing T-peel at a tensile speed of 300 mm/min using a tensile tester (manufactured by SHIMADZU CORPORATION, equipment name: Autograph AGS-D type), in accordance with JIS K6854-3: 1999, as described later in Examples.

The peel strength between the substrate layer (A) 11 or the like and the ink-receiving layer (B) 12 is equal to or more than the peel strength between the in-mold molding label and the resin molded article and is usually 0.5 to 10 N/15 mm, preferably 1 to 5 N/15 mm.

### [Methods for Molding Substrate Layer and Ink-Receiving Layer]

The method for molding the substrate layer (A) 11 is not particularly limited, and various known methods can be used. Specific examples include cast molding in which a molten resin is extruded into a sheet shape using a single-layer or multilayer T-die or I-die connected to a screw type extruder, inflation molding in which a molten resin is extruded into a tubular shape using a circular die, and expanded by internal air pressure, and calender molding and rolling molding in which a kneaded material is rolled by a plurality of hot rolls and processed into a sheet shape. The substrate layer (A) 11 itself may be a single-layer structure or a multilayer structure of two or more layers.

The ink-receiving layer (B) 12 can also be molded by the same method as the method for molding the substrate layer (A) 11.

Examples of the method for laminating the substrate layer (A) 11 and the ink-receiving layer (B) 12 include coextrusion molding in which the molten resins of both layers are laminated in a die; extrusion laminate molding in which at least one of the substrate layer (A) 11 and the ink-receiving layer (B) 12 is previously molded into a film, and the heated and melted resin constituting the other layer is extruded and laminated on the film; and dry laminate molding or wet laminate molding in which the substrate layer (A) 11 and the ink-receiving layer (B) 12 previously obtained by film molding are laminated via an adhesive layer. In these cases, the thickness of the obtained ink-receiving layer (B) 12 is preferably 3 to 30 µm.

Alternatively, it is also possible to coat the substrate layer (A) 11 with the resin constituting the ink-receiving layer (B) 12, as a paint, by a method described later and dry it as needed. This paint can be made by dissolving or dispersing the resin constituting the ink-receiving layer (B) 12 in a solvent. The solvent is not particularly limited, and, for example, water, toluene, acetone, methyl ethyl ketone, methanol, and ethanol can be preferably used. The coating method is not particularly limited, and, for example, known coating methods such as die coaters, bar coaters, roll coaters, lip coaters, gravure coaters, spray coaters, blade coaters, reverse coaters, and air knife coaters can be used. In this case, the thickness of the obtained ink-receiving layer (B) 12 is preferably 0.1 to 10 µm.

Among these, preferred is a method of simultaneously performing the lamination and molding of the substrate layer (A) 11 and the ink-receiving layer (B) 12 by coextrusion cast molding in which using a multilayer T-die connected to a screw type extruder, the molten resins of both layers are laminated in the die and extruded into a sheet shape. This method is preferred because it is simple in terms of a step, and the substrate layer (A) 11 and the ink-receiving layer (B) 12 are obtained as a coextruded film having such adhesion as not to peel easily in post-processing steps such as the formation of the printed layer (C) 13 and cutting.

The substrate layer (A) 11 and the ink-receiving layer (B) 12 may be nonstretched (unstretched) films not subjected to stretching, or may be subjected to stretching in at least one axial direction to be stretched films. The nonstretched films have better transparency and shape conformability to a molded article. On the other hand, the stretched films have better transparency, lightweight properties, and thickness uniformity due to film thinning. When the substrate layer (A) 11 and the ink-receiving layer (B) 12 are each a multilayer structure of two or more layers, for example, it may be one obtained by superimposing uniaxial stretching on biaxial stretching.

In the in-mold molding label 1 in this embodiment, the ink-receiving layer (B) 12 may be subjected to surface oxidation treatment as needed. The surface of the film after molding has relatively low surface free energy, and by subjecting the surface of the film to surface oxidation treatment, the surface free energy of the surface of the film can be increased. As a result, the transition properties of a toner composition is improved, and thus the adhesiveness between the printed layer (C) 13 and the ink-receiving layer (B) 12 improves. The improvement of the transition properties of the toner composition may be performed by controlling the water contact angle of the ink-receiving layer (B) 12 surface. Examples of the surface oxidation treatment can include corona discharge treatment, flame treatment, plasma treatment, glow discharge treatment, and ozone treatment. Among these, corona discharge treatment and plasma treatment are preferably used as the surface oxidation treatment. Alternatively, the ink-receiving layer (B) may be subjected to flame treatment. In the in-mold molding label 1, a surface coating layer may be formed on the ink-receiving layer (B) 12 for the same purpose as the above-described surface oxidation treatment.

### [Printed Layer (C)]

The printed layer (C) 13 comes into contact with the molten resin constituting the resin molded article 21 in a molding machine (for example, a mold) in in-mold molding. The printed layer (C) 13 melts by the heat of the molten resin to fuse with this molten resin, and further solidifies after cooling, to contribute to the affixing of the wall surface of the resin molded article 21 and the in-mold molding label 1 to each other.

The printed layer (C) 13 is a resin film layer containing a polyethylene-based resin as a main component.

In the in-mold molding label 1, the printed layer (C) 13 may be provided over the entire one surface of the ink-receiving layer (B) 12 as shown in Fig. 1, or may be partially or intermittently provided on the ink-receiving layer (B) 12 as shown in Fig. 5. Examples of the mode in which the printed layer (C) 13 is partially or intermittently provided on the ink-receiving layer (B) include a case where the printed layer (C) 13 is provided so as to form letters, a pattern, or the like. Alternatively, examples of the mode include a case where the printed layer (C) 13 is provided in a dotted, striped, or checked pattern or the like. Alternatively, the printed layer (C) 13 may be provided so as to be arranged with random positions, shapes, and sizes and with gaps sandwiched between adjacent printed layers (C) 13.

The printed layer (C) 13 itself may be a single-layer structure or a multilayer structure of two or more layers. When the printed layer (C) 13 itself is a multilayer structure of two or more layers, the layers may be composed of the same component or may be composed of different components respectively.

Examples of the printing method for forming the printed layer (C) 13 include offset printing, letterpress printing, flexographic printing, gravure printing, screen printing, and ink jet printing. The type of ink to be attached to the printed layer (C) 13 should be appropriately selected according to the printing method and is not particularly limited. From the viewpoint of the transition properties and adhesiveness of the ink to the ink-receiving layer (B) 12, liquid electrostatic inks (typically, ElectroInk from Hewlett-Packard) are preferably used as the toner composition.

The printed layer (C) 13 in this embodiment is preferably a toner printed layer formed of a liquid ink containing thermoplastic toner particles in which a color material is blended in a binder of a thermoplastic resin comprising an ethylene-based copolymer. More preferably, these thermoplastic toner particles have chargeability. Further preferably, printing is performed by transferring the thermoplastic toner particles to the printed layer (C) 13 by an electrophotographic method. Particularly preferably, the printed layer (C) 13 is formed using a liquid electroink containing these thermoplastic toner particles. When the printed layer (C) 13 is formed using this type of electroink, the printing method is preferably offset printing, more preferably digital offset printing, from the viewpoint of small lot adaptation, productivity, and the like.

A case where the printed layer (C) 13 is formed by offset printing will be described below. Here, an example of a case where a liquid electroink is used as the toner composition will be described, but this is not limiting, and the printed layer (C) 13 may be formed using another printing method or toner composition, as long as it is a layer containing a polyethylene-based resin as a main component.

### (Toner Composition)

The toner composition contains a polyethylene-based resin. Further, the toner composition usually contains a color material. In addition, the toner composition preferably further contains a liquid carrier and a charge-controlling compound. The toner composition more preferably has chargeability. The toner composition may further contain a dispersion stabilizer for stabilizing the electrical properties of the charge-controlling compound. The printed layer (C) 13 having printed information can be formed by the attachment (or transition, transfer, or the like) of such a toner composition in which the polyethylene-based resin and the color material are dispersed, to the ink-receiving layer (B) 12. In other words, the printed layer (C) 13 is a polymer film containing a polyethylene-based resin as a main component, and a color material is usually contained in this polymer film. The printed layer (C) 13 contains 50% by mass or more, more preferably 60% by mass or more, and further preferably 70% by mass or more of the polyethylene-based resin. On the other hand, the printed layer (C) 13 preferably contains 99.9% by mass or less, more preferably 99.5% by mass or less, and further preferably 99.0% by mass or less of the polyethylene-based resin.

### (Liquid Carrier)

The liquid carrier dissolves, disperses, or emulsifies the polyethylene-based resin and the color material in the toner composition. The liquid carrier is not particularly limited, but low dielectric constant nonpolar liquids are preferably used. The nonpolar liquids preferably have an electrical resistivity of at least 10⁹ **Ω**·cm or more and a dielectric constant of less than 3.0. Examples of the nonpolar liquids include, but are not particularly limited to, aliphatic hydrocarbons, aromatic hydrocarbons, and light mineral oils. Among aliphatic hydrocarbons, branched chain aliphatic hydrocarbons are preferred, and, for example, Isopar (registered trademark) series isoparaffin hydrocarbons (manufactured by Exxon Mobil Corporation) are preferably used. The content of the liquid carrier is not particularly limited but is preferably 10 to 99% by mass, more preferably 30 to 90% by mass, and further preferably 50 to 80% by mass based on the total amount of the toner composition.

### (Polyethylene-Based Resin)

Examples of the polyethylene-based resin that the printed layer (C) 13 contains as the main component include low density or medium density high pressure process polyethylene having a density of 0.900 to 0.935 g/cm³, linear polyethylene having a density of 0.880 to 0.940 g/cm³, and ethylene-based copolymers. Among them, linear polyethylene or ethylene-based copolymers are preferred.

### (Ethylene-Based Copolymer)

Examples of the ethylene-based copolymer contained in the printed layer (C) 13 include, but are not particularly limited to, copolymers of ethylene and one or two or more comonomers selected from vinyl esters such as vinyl acetate and vinyl propionate; (meth)acrylic acid; (meth)acrylates such as methyl (meth)acrylate, ethyl (meth)acrylate, and butyl (meth)acrylate; α-olefins having 3 to 10 carbon atoms, such as propylene, 1-butene, 1-pentene, 1-hexene, 1-heptene, 1-octene, and 4-methyl-1-pentene; terephthalic acid; and alkyl terephthalates such as butyl terephthalate.

Among these, from the viewpoint of adhesiveness to the ink-receiving layer (B) 12 and the resin molded article 21, ethylene-vinyl acetate copolymers and ethylene-methacrylic acid copolymers are preferred, and ethylene-methacrylic acid copolymers are more preferred. The content of the ethylene unit in the ethylene-based copolymer is not particularly limited but is preferably 40 to 95% by mass, more preferably 50 to 90% by mass, and further preferably 60 to 85% by mass. The content of the ethylene-based copolymer is not particularly limited but is preferably 5 to 80% by mass, more preferably 10 to 60% by mass, and further preferably 15 to 40% by mass based on the total amount of the toner composition.

The printed layer (C) 13 preferably contains an ethylene-based copolymer having a melting point of 135°C or less. In this case, it is easy to form the printed layer (C) 13 on the ink-receiving layer (B) 12 in performing the transfer or the like of a polymer film image using the toner composition. In addition, the adhesiveness between the printed layer (C) 13 and the resin molded article 21 can also be improved. From the viewpoint, the melting point of the ethylene-based copolymer contained in the printed layer (C) 13 is preferably 65°C to 135°C, more preferably 75°C to 130°C, further preferably 85°C to 125°C or less, and particularly preferably 90°C to 120°C. When the melting point of the ethylene-based copolymer constituting the printed layer (C) 13 is equal to or more than the lower limit of the range, stickiness can be suppressed at ordinary temperature to prevent blocking. When the melting point of the ethylene-based copolymer constituting the printed layer (C) 13 is equal to or less than the upper limit of the range, the adhesiveness between the printed layer (C) 13 and the ink-receiving layer (B) 12, and the adhesiveness between the printed layer (C) 13 and the resin molded article 21 tend to improve.

By providing the printed layer (C) 13 on the entire surface on the ink-receiving layer (B) 12, the adhesiveness between the printed layer (C) 13 and the resin molded article 21 can be increased. On the other hand, by partially providing the printed layer (C) 13 on the surface on the ink-receiving layer (B) 12, the adhesiveness between the printed layer (C) 13 and the resin molded article 21 can also be adjusted low.

Examples of the form of the printed layer (C) 13 when the printed layer (C) 13 is partially provided on the surface on the ink-receiving layer (B) 12 include the form of halftone dots, the form of a mesh, and the form of lines at equal intervals. The printed layer (C) 13 is preferably formed in a regular pattern of a uniform and fine size.

By forming the printed layer (C) 13 in the pattern as described above, unevenness in the strength of adhesiveness occurring between the printed layer (C) 13 and the resin molded article 21 can be reduced, and the feel when the label is peeled from the resin molded article 21 is also smooth.

As used herein, the melting point of a resin means a value obtained from the temperature of the endothermic peak obtained by differential scanning calorimetry (DSC). The melting point of the ethylene-based copolymer constituting the printed layer (C) 13 is preferably 5°C or more, more preferably 10°C or more, lower than the melting point of the thermoplastic resin constituting the resin molded article 21. Thus, the adhesiveness between the printed layer (C) 13 and the resin molded article 21 tends to improve.

### (Color Material)

As the color material, known dyes or pigments used in printing inks can be used. The pigments may be either organic pigments or inorganic pigments. Examples of the dyes include, but are not particularly limited to, azo dyes, anthraquinone dyes, indigo dyes, cyanine dyes, quinoline dyes, benzoquinone dyes, naphthoquinone dyes, and phthalocyanine dyes. Examples of the organic pigments include, but are not particularly limited to, quinacridone-based pigments such as Quindo Magenta, azo pigments such as toluidine red, and phthalocyanine-based pigments such as Monastral Blue and Monastral Green. Examples of the inorganic pigments include, but are not particularly limited to, carbon black, oxides of metals such as Fe, Co, Ni and Ti, ferrites of metals such as Zn, Cd, Ba and Mg, and alloys. Among these, pigments are preferred, organic pigments or inorganic pigments are more preferred. The content of the color material is not particularly limited but is preferably 0.1 to 35% by mass, more preferably 1 to 30% by mass, and further preferably 5 to 25% by mass based on the total amount of the toner composition, for the dye and the organic pigment. The content of the color material is preferably 0.1 to 80% by mass, more preferably 10 to 70% by mass, and further preferably 30 to 50% by mass for the inorganic pigment.

### (Charge-Controlling Compound)

The charge-controlling compound is used for controlling the charging polarity and charging quantity of the thermoplastic toner particles. As the charge-controlling compound, anionic, cationic, amphoteric, or nonionic surface-active compounds are used. One of these charge-controlling compounds may be used singly, or two or more of these charge-controlling compounds may be used in combination. More specific examples of the charge-controlling compound include, but are not particularly limited to, metallic soaps such as petroleum acid barium, phospholipids such as lecithin, metal salt compounds of organic acids, organic phosphoric acid compounds, organic sulfonic acid compounds, and quaternary ammonium salt compounds. The content of the charging control compound is not particularly limited but is preferably 0.1% by mass to 5% by mass, more preferably 0.5% by mass to 4% by mass, and further preferably 1% by mass to 3% by mass based on the total amount of the toner composition.

### (Dispersion Stabilizer)

The dispersion stabilizer is used for promoting the stabilization of the charge-controlling compound. Examples of the dispersing agent include, but are not particularly limited to, polyvinylpyrrolidone, polyvinyl alcohol, polyethylene glycol, and polyethylene glycol.

### (Preparation of Toner Composition)

The toner composition can be prepared by mixing a polyethylene-based resin and a color material with heating to form thermoplastic toner particles in a liquid carrier, and further adding a charge-controlling compound as needed. A wax may be mixed together with the color material in the preparation of the toner composition. When the toner composition contains the wax, the adhesiveness between the printed layer (C) 13 and the resin molded article 21 improves.

### (Formation of Printed Layer)

The formation of the printed layer (C) can be performed, for example, by performing offset printing using a liquid electroink. First, a cylindrical image-forming plate is charged by corona discharge, and then this image-forming plate is exposed to form an electrostatic image. Next, a toner composition is supplied to the image plate on which the electrostatic image is formed, to develop the electrostatic image. Further, the electrostatic toner image formed of the toner composition is transferred from the image-forming plate to a cylindrical blanket. The toner composition transferred to the blanket is heated by the blanket to cohere or aggregate the thermoplastic toner particles contained in the toner composition. As the cohesion or aggregation proceeds, the thermoplastic toner particles form a polymer film, and a polymer film image in which a color material is contained in this polymer film occurs on the blanket. The polymer film image formed in this manner is transferred from the blanket to the ink-receiving layer (B) 12 and further cooled and solidified, and thus the printed layer (C) 13 is formed.

### (Ink Density)

Ink density indicates the proportion of the area of the printed layer (C) 13 to the area of the ink-receiving layer (B) 12. When the printed layer (C) 13 is formed on the ink-receiving layer (B) 12 by the above-described method, the printed layer (C) 13 is formed as a collection of dotted ink (halftone dots) formed on the ink-receiving layer (B) 12. Therefore, the ink density can be represented by the dot percent indicating the proportion of the area occupied by the halftone dot portions on the ink-receiving layer (B) 12.

In the in-mold molding label 1, the dot percent of the printed layer (C) 13 is preferably 5 to 100%, more preferably 10 to 90%, further preferably 15 to 80%, and particularly preferably 20 to 70%. When the ink density of the in-mold molding label 1 is within the range, sufficient adhesiveness between the in-mold molding label 1 in which the printed layer (C) 13 is formed and the resin molded article 21 tends to be easily exhibited.

As used herein, the dot percent means a value calculated by taking an image of the in-mold molding label 1 on the printed layer (C) 13 side using, for example, a CCD camera, and obtaining the proportion of the area of the printed halftone dot portions by image processing.

### (Thickness of Printed Layer)

The thickness of the printed layer (C) 13 is appropriately changed according to the printing method and the toner composition and is not particularly limited but is preferably 0.5 to 20 µm, more preferably 0.8 to 10 µm, and further preferably 1.0 to 5 µm. When the printed layer (C) 13 is within the range, the ink density tends to be able to be sufficiently kept to increase visibility, and sufficient adhesiveness tends to be able to be maintained.

The ratio between the thickness of the ink-receiving layer (B) 12 and the thickness of the printed layer (C) 13 is 1:20 to 2:1, preferably 1:15 to 1:1, and more preferably 1:12 to 1:5. Due to the ratio between the thickness of the ink-receiving layer (B) 12 and the thickness of the printed layer (C) 13 being in the range, at a time when the printed layer (C) 13 melts by the heat of the molten resin in in-mold molding, the heat of the molten resin is also conducted to the ink-receiving layer (B) 12, and the ink-receiving layer (B) 12 also melts partially, and thus the ink-receiving layer (B) 12 contributes to adhesion to the resin molded article 21.

For the thickness of the substrate layer (A) 11, the ink-receiving layer (B) 12, and the printed layer (C) 13, preferably, the substrate layer (A) 11 is thickest, the ink-receiving layer (B) 12 is thinnest, and the printed layer (C) has an intermediate thickness between the thickness of the substrate layer (A) 11 and the thickness of the ink-receiving layer (B) 12.

### [Other Layers]

### (Second Ink-Receiving Layer and Second Printed Layer)

The in-mold molding label 1 of the present invention may further have a second printed layer (c) and a second ink-receiving layer (b) in this order on the surface of the substrate layer (A) opposite to the side on which the ink-receiving layer (B) is provided, as shown in Fig. 7, apart from the ink-receiving layer (B) 12 and the printed layer (C) 13. In other words, the in-mold molding label 1 of the present invention can be laminated so as to comprise a second printed layer (c) 41, a second ink-receiving layer (b) 31, the substrate layer (A) 11, the ink-receiving layer (B) 12, and the printed layer (C) 13 in this order. When the label 1 is affixed to the resin molded article 21, the outermost layer is the second printed layer (c) 41, and the printed layer (C) 13 adheres to the resin molded article 21.

The second ink-receiving layer (b) 31 and the second printed layer (c) 41 are the same as the ink-receiving layer (B) 12 and the printed layer (C) 13 respectively. As optional layers, a layer for adjusting the peel strength between the substrate layer (A) 11 and the ink-receiving layer (B) 12 or between the ink-receiving layer (B) 12 and the printed layer (C) 13 may be provided, and various layers may be provided on the surface opposite to the side on which the ink-receiving layer (B) 12 and the printed layer (C) 13 are provided, via the substrate layer (A) 11, in a range that does not inhibit the effects of the present invention.

In the case of a mode in which the in-mold molding label 1 of the present invention has the second ink-receiving layer (b) 31 and second printed layer (c) 41, that is, in a case where the in-mold molding label 1 of the present invention has printed layers on both sides of the substrate layer (A) 11 respectively via the substrate layer (A) 11, various design properties as described below can be provided to the labeled resin molded article 2 to which the label is affixed.

For example, when the substrate layer (A) 11 is opaque, the printed information of the second printed layer (c) 41 is visually recognized before the substrate layer (A) 11 is peeled, but by peeling the substrate layer (A) 11, the printed information of the printed layer (C) 13 is visually recognized this time. For example, when the printed information of the printed layer (C) 13 is fluorescent or the like, the printed information of the second printed layer (c) 41 and the printed information of the printed layer (C) 13 can also be simultaneously visually recognized by irradiation or the like with blue light or the like even before the substrate layer (A) 11 is peeled. Further, when the substrate layer (A) 11 is transparent, the printed information of both the printed layer (C) 13 and the second printed layer (c) 41 is simultaneously visually recognized before the substrate layer (A) 11 is peeled, and only the printed information of the printed layer (C) 13 is visually recognized when the substrate layer (A) 11 is peeled.

In this manner, for example, by whether the substrate layer (A) 11 is transparent or opaque, and by appropriately designing the types of the printed layer (C) 13 and the second printed layer (c) 41, the labeled resin molded article 2 excellent in design properties can be provided.

### (Heat Seal Layer)

In the in-mold molding label 1 of the present invention, a heat seal layer may be provided in any place. The heat seal layer is activated by heat during the molding of a resin molded article to have the function of an adhesive. The heat seal layer can be, for example, one obtained by molding a resin composition comprising a thermoplastic resin into a film shape.

As the thermoplastic resin used for the heat seal layer, conventionally known ones can be appropriately used.

In the present invention, the adhesiveness of the ink-receiving layer (B) 12 and the printed layer (C) 13 to the resin molded article 21 is high, and therefore the label and the resin molded article can be sufficiently adhered to each other without providing the heat seal layer.

### (Protective Layer)

In the in-mold molding label 1 of the present invention, a protective layer comprising a resin film may be provided on the surface on the substrate layer (A) 11 side in order to improve light resistance, water resistance, gas resistance, and robustness such as friction resistance. The resin constituting the protective layer is not particularly limited, and the same thermoplastic resin as the one used for the substrate layer (A) 11 described above can be used. The thickness of the protective layer is not particularly limited either but is preferably 5 to 100 µm, more preferably 10 to 50 µm. As the means for providing the protective layer, various methods can be adopted, and the means is not particularly limited. The means should be appropriately selected and used from known means such as means of multilayering on the surface on the substrate layer (A) 11 side using a dry lamination method or a thermal lamination method, a method of extruding and laminating the protective layer together with the substrate layer (A) 11 and the ink-receiving layer (B) 12, and a method of coating with a thermoplastic resin.

### [Labeled Resin Molded Article]

The present invention also relates to the labeled resin molded article 2 obtained by affixing and integrating the above-described in-mold molding label 1 with a resin molded article by in-mold molding. In the labeled resin molded article 2 of the present invention, peeling proceeds at the interface between the substrate layer (A) 11 and the ink-receiving layer (B) 12, and the labeled resin molded article 2 has the ink-receiving layer (B) 12 and the printed layer (C) 13 on the resin molded article surface after peeling; or peeling proceeds at the interface between the ink-receiving layer (B) 12 and the printed layer (C) 13, and the labeled resin molded article 2 has the printed layer (C) 13 on the resin molded article surface after peeling.

The in-mold molding label 1 of the present invention can be particularly preferably used as an in-mold molding label for blow molding. The labeled resin molded article 2 manufactured in this manner is a molded article in which there is no deformation of the label, the adhesive strength between the molded article body and the label is strong, there are no blisters, and the appearance of the molded article decorated with the label is good, because the label and the resin molded article are integrally molded after the label is fixed in the mold.

The in-mold molding label 1 of the present invention can also be used as an in-mold molding label for differential pressure molding. At this time, the label is placed so that the printed surface of the label is in contact with the inner surface of the lower female mold half of a differential pressure molding mold, then the label is fixed to the inner wall of the mold by suction, then a melt of a container molding material resin sheet is guided above the lower female mold half and differential pressure-molded by an ordinary method, and a labeled resin molded article in which the label is affixed and integrated with the outer wall of the molded article is molded. For the differential pressure molding, either method of vacuum molding and compressed air molding can be adopted, but a method using both in combination and using a plug assist is preferred.

Here, the in-mold molding label and the resin molded article being "affixed and integrated" with each other means a state in which part of the resin component constituting the resin molded article and part of the resin component constituting the ink-receiving layer (B) 12 or the printed layer (C) 13 of the in-mold molding label are adhered to each other in a state of being mixed at the interface therebetween. Such affixing and integration can be achieved by forming the labeled resin molded article 2 by in-mold molding.

In the resin molded article 2 labeled with the in-mold molding label according to the present invention, the resin molding material is not particularly limited as long as it is a thermoplastic resin. Examples thereof can include thermoplastic resins such as olefin-based resins such as polyethylene and polypropylene, polystyrene resins, and polyethylene terephthalate resins from the viewpoint of adhesiveness to the ink-receiving layer (B) 12 and the printed layer (C) 13. These thermoplastic resins may be used singly, or a plurality of these thermoplastic resins may be used. Among them, polyethylene-based resins and polystyrene resins are preferably used, and polyethylene-based resins are more preferably used.

The labeled resin molded article 2 of the present invention can be used, for example, as chemical containers (bottles) used for household detergents, bathtub detergents, toilet detergents, car wash detergents, facial cleansers, liquid soaps, shampoos, rinses, deodorants, liquid bath agents, ironing starches, disinfectant alcohols, polishing waxes, insecticides, and the like; food containers (bottles) used for soft drinks, alcoholic drinks, soy sauce, oils, sauces, Worcester sauce, dressings, and the like; squeeze containers used for spreads such as jam, margarine, peanut butter, ketchup, and mayonnaise; containers for ice creams, yogurts, and the like; and containers for laundry detergents, dishwashing detergents, wet wipes, and the like.

As the applications, use as the display of a coupon label or a winning ticket, forgery prevention, security, and the like is possible. Further, when the substrate layer (A) 11 of the in-mold molding label 1 is changed to a transparent or semitransparent one, the substrate layer (A) functions as a barrier layer, and thus the durability of the printed information of the labeled resin molded article can be improved.

In addition, from the viewpoint of providing a design, the labeled resin molded article 2 having a design in which the printed information of the printed layer (C) 13 and the printed information of the second ink-receiving layer (b) 31 are superimposed on each other may be provided.

### Examples

The present invention will be specifically described below by giving Examples. The materials, amounts used, proportions, treatment details, treatment procedures, and the like shown in the following Examples can be appropriately changed, and the invention is defined by the claims that follow. Therefore, the present invention is not limited to the following Examples.

### [Evaluation Methods]

The evaluation of in-mold molding labels and labeled resin molded articles obtained in the Examples and Comparative Examples was performed by the following methods.

### (Evaluation of Ink Transition Properties in Label)

B: Good (ink transition properties to the label is good)
C: Fair (partial loss is seen in ink transition to the label)
D: Poor (ink transition properties to the label is poor)

### (Evaluation of Peel Strength)

The peel strength between the substrate layer (A) and the ink-receiving layer (B) was obtained by cutting the labeled resin molded article to a width (MD direction) of 15 mm and a length (TD direction) of 110 mm, and performing T-peel at a tensile speed of 300 mm/min using a tensile tester (manufactured by SHIMADZU CORPORATION, equipment name: Autograph AGS-D type), in accordance with JIS K6854-3: 1999.

### (Evaluation of Ink Transferability to Resin Molded Article)

The transferability of the ink when the label was peeled from the resin molded article was determined by the following criteria.
A: Excellent (the ink is completely transferred to the resin molded article)
B: Good (the ink is transferred to the resin molded article in a state in which some of the ink is lost)
C: Fair (the printed information is substantially transferred to the resin molded article but also remains lightly on the label side)
D: Poor (the ink is not transferred to the resin molded article at all)

The details of the materials used in the Examples and the Comparative Examples are shown in Table 1.

### [Table 1]

**Table 1**

| Type | Code | Details |
|---|---|---|
| (A) Substrate layer | A1 | Resin composition obtained by kneading, by extruder set at temperature of 230°C, composition obtained by blending 67% by mass of polypropylene ([NOVATEC PP FY6 manufactured by Japan Polypropylene Corporation], MFR (JIS K7210: 1999) = 2.5 g/10 min), 10% by mass of high density polyethylene ([NOVATEC HD HJ580N manufactured by Japan Polyethylene Corporation], MFR (JIS K6922-2: 2010) = 12 g/10 min, melting point (JIS K7121: 2012) = 134°C), and 23% by mass of calcium carbonate ([SOFTON 2200 manufactured by Bihoku Funka Kogyo Co., Ltd.], average particle diameter 1.0 µm (measurement method: air permeation method) |
| | A2 | High density polyethylene [NOVATEC HD HF560 manufactured by Japan Polyethylene Corporation, MFR (JIS K6922-2: 2010) = 7 g/10 min, melting point (JIS K7121: 2012) = 134°C] |
| (B) Ink-receiving layer | B1 | Polyethylenimine [EPOMIN P-1000 manufactured by NIPPON SHOKUBAI CO., LTD.] |
| | B2 | Ethylene-vinyl acetate copolymer [AQUATEX EC-1800 manufactured by Japan Coating Resin Corporation] |
| | B3 | Urethane resin [SUPERFLEX 650 manufactured by DKS Co. Ltd.] |
| | B4 | Acrylic resin [RI KABOND ES-330 manufactured by Japan Coating Resin Corporation] |
| (C) Printed layer | C1 | Ethylene-methacrylic acid copolymer comprising color material [HP Electrolnk Black manufactured by Hewlett-Packard Indigo B. V.] |
| | C2 | Rosin-modified phenolic resin (oxidative polymerization type) comprising color material |
| | | [BEST ONE BEST SP Black manufactured by T&K TOKA CO., LTD.] |
| | C3 | Acrylic ester oligomer (photopolymerization type) comprising color material [UV161 Black manufactured by T&K TOKA CO., LTD.] |
| Resin molded article | D1 | High density polyethylene [NOVATEC HD HJ490 manufactured by Japan Polyethylene Corporation] |
| | | MFR (JIS K6922-2: 2010) = 20 g/10 min, melting point (JIS K7121: 2012) = 133°C |
| | D2 | Low density polyethylene [NOVATEC LD LJ802 manufactured by Japan Polyethylene Corporation] |
| | | MFR (JIS K6922-2: 2010) = 22 g/10 min, melting point (JIS K7121: 2012) = 106°C |
| | D3 | Linear low density polyethylene [NOVATEC LL UJ990 manufactured by Japan Polyethylene Corporation] |
| | | MFR (JIS K6922-2: 2010) = 35 g/10 min, melting point (ISO 11357-3: 2013) = 126°C |
| | D4 | Propylene-ethylene random copolymer [NOVATEC MG03BD manufactured by Japan Polypropylene Corporation] |
| | | MFR (JIS K7210: 1999) = 30 g/10 min |

### <Example 1>

### (Manufacture of Substrate Layer)

The substrate layer material A1 was kneaded by an extruder set at 230°C. Then, the substrate layer material A1 was supplied to a die set at 250°C, and extruded into a sheet shape. The extruded sheet was cooled to about 40°C by a cooling roll to obtain a nonstretched sheet. Next, the nonstretched sheet was reheated to a temperature of 150°C, then stretched 5 times in the longitudinal direction (MD direction) using the peripheral speed difference of a roll group, then reheated to a temperature of 155°C using a tenter oven, and stretched 7.5 times in the transverse direction (TD direction) using a tenter. Then, the stretched sheet was subjected to annealing treatment at a temperature of 165°C and cooled to a temperature of 60°C, and then the edges were slit to obtain a substrate layer of a biaxially stretched film. At this time, the thickness of the substrate layer was 80 µm.

### (Formation of Ink-Receiving Layer)

One surface of the substrate layer fabricated in the previous step was subjected to corona discharge treatment using a corona discharge treatment apparatus (manufactured by KASUGA DENKI, INC., equipment name: HF400F). In the corona discharge treatment, a discharge electrode made of aluminum having a length of 0.8 m was used, and a silicone-covered roll was used for a treater roll. The gap between the discharge electrode and the treater roll was 5 mm, the line treatment speed was 15 m/min, and the applied energy density was 4,200 J/m².

Next, the surface on the side subjected to the corona discharge treatment was coated with the ink-receiving layer material B1 so that the solid content was 0.2 g/m² after drying. For the coating, a bar coater was used. Then, the coated substrate layer was dried in an oven to form an ink-receiving layer, and wound. The thickness of the ink-receiving layer was about 0.2 µm.

### (Manufacture of In-Mold Molding Label)

A printed layer was formed by printing on the ink-receiving layer fabricated in the above step. As the printed layer material, the printed layer material C1 described in Table 1 was used, and a wet electrophotographic printing machine (manufactured by Hewlett-Packard Inc., equipment name: HP Indigo WS6800) was used. For the conditions of the printing, the printing was carried out in an indoor environment at a temperature of 23°C and a relative humidity of 50%, at a blanket temperature of 105°C and a transfer pressure of 200 kg. The dot percent was 100%.

Next, the substrate layer was punched into a size of 70 mm in the MD direction and 90 mm in the TD direction of the substrate layer by a punching machine (manufactured by DUMBBELL CO., LTD., equipment name: SD type lever-controlled sample cutter SDL-100) to obtain an in-mold molding label.

### (Manufacture of Labeled Resin Molded Article)

The in-mold molding label was arranged in a test piece molding mold having a cavity having a length of 130 mm, a width of 150 mm, and a thickness of 2 mm so that the unprinted surface of the label was in contact with the cavity, and sucked and fixed. Then, the mold was closed, and the resin molded article material D1 described in Table 1 was injection-molded under the conditions of a resin temperature of 230°C and an injection pressure of 74 N/m² using an injection molding machine (manufactured by Niigata Engineering Co., Ltd., equipment name: NV50ST). Then, after the injection molding, the mold was sufficiently cooled for 20 seconds, and the mold was opened to obtain a labeled resin molded article.

### <Examples 2 and 3 and Example 6>

The labels and the labeled resin molded articles of Examples 2, 3, and 6 were obtained as in Example 1 except that in Example 1, the resin molded article material D1 was changed to resin molded article materials described in Table 1, respectively.

### <Example 4>

The label and the labeled resin molded article of Example 4 were obtained as in Example 3 except that in Example 3, the substrate layer material A1 was changed to the substrate layer material A2 described in Table 1.

### <Example 5>

The label and the labeled resin molded article of Example 5 were obtained as in Example 1 except that in Example 1, the dot percent of 100% as the printing conditions was changed to dotted printing with a dot percent of 50%.

### <Comparative Examples 1 and 2>

The labels and the labeled resin molded articles of Comparative Examples 1 and 2 were obtained as in Example 1 except that in Example 1, the ink-receiving layer material B1 was changed to ink-receiving layer materials described in Table 1.

### <Comparative Example 3>

When the ink-receiving layer material B1 was changed to the ink-receiving layer material B4 described in Table 1, in Example 1, the ink was not fixed to the ink-receiving layer, and printing could not be performed.

### <Comparative Example 4>

When the ink-receiving layer (B) was not provided in Example 1, the ink was not fixed to the substrate layer (A), and printing could not be performed.

### <Comparative Examples 5 and 6>

The labels and the labeled resin molded articles of Comparative Examples 5 and 6 were obtained as in Example 1 except that in Example 1, the printed layer material C1 was changed to printed layer materials described in Table 1.

### [Evaluation]

The configurations and evaluation results of the resin molded articles labeled with the in-mold molding labels are shown in Table 2.

### [Table 2]

**Table 2**

| | In-mold molding label | | | | | Resin molded article | | |
|---|---|---|---|---|---|---|---|---|
| | (A) Substrate layer | (B) Ink-receiving layer | (C) Printed layer | Dot percent (%) | Ink transition properties | (D) Resin molded article material | Peel strength (N/m²) | Ink transferability to resin molded article |
| Example 1 | A1 | B1 | C1 | 100 | B | D1 | 2.1 | A |
| Example 2 | A1 | B1 | C1 | 100 | B | D2 | 1.9 | A |
| Example 3 | A1 | B1 | C1 | 100 | B | D3 | 2.5 | A |
| Example 4 | A2 | B1 | C1 | 100 | B | D3 | 9.5 | A |
| Example 5 | A1 | B1 | C1 | 50 | B | D1 | 1 | A |
| Example 6 | A1 | B1 | C1 | 100 | B | D4 | 0.8 | C |
| Comparative Example 1 | A1 | B2 | C1 | 100 | B | D1 | 13.7 | B |
| Comparative Example 2 | A1 | B3 | C1 | 100 | B | D1 | 10.8 | B |
| Comparative Example 3 | A1 | B4 | C1 | 100 | D | | | |
| Comparative Example 4 | A1 | None | C1 | 100 | D | | | |
| Comparative Example 5 | A1 | B1 | C2 | 100 | B | D1 | 0.3 | D |
| Comparative Example 6 | A1 | B1 | C3 | 100 | B | D1 | 0.3 | D |

As is clear from Table 2, in Examples 1 to 6, when the printed layer (C) was provided on the substrate layer (A) via the ink-receiving layer (B) by printing, the ink transition properties were good. Further, the printed layer (C) and the resin molded article were affixed to each other by the heat of the resin molded article material melted by in-mold molding.

When the label (substrate layer) was peeled from the labeled resin molded article, the printed layer (C) was transferred from the label (substrate layer) side to the resin molded article side, and a patterned resin molded article having printed information was obtained. In Examples 1 to 6, when the label was peeled, the peel strength was 1 to 10 N/15 mm, showing a practical value as an easily peelable label. The fact that the printed layer (C) is transferred from the label side to the resin molded article side when the label is peeled is achieved by the relationship of the peel strength between the printed layer (C) and the resin molded article being higher than the peel strength between the printed layer (C) and the ink-receiving layer (B), or the peel strength between the printed layer (C) and the resin molded article being higher than the peel strength between the ink-receiving layer (B) and the substrate layer (A).

In addition, when Example 1 and Example 5 were compared, it was shown that the peel strength can be controlled by changing the dot percent.

On the other hand, in the labeled resin molded articles of Comparative Examples 1 and 2 different in the ink-receiving layer (B) from the Examples, at the time of label peeling, the printed layer (C) was not transferred to the resin molded article, and part of the printed layer (C) remained on the label side. In addition, the peel strength is also strong and is beyond the practical range as an easily peelable label. The ink-receiving layer (B) of the label of Comparative Example 3 had poor ink receptivity, and the printed layer (C) could not be provided. The labeled resin molded article of Comparative Example 4 did not have the ink-receiving layer (B), and therefore the transition of the ink to the label could not be made, and the printed layer (C) could not be provided.

In the labeled resin molded articles of Comparative Examples 5 and 6 in which an oil based ink or an ultraviolet curable ink common for use in offset printing was used, practically preferred peel strength was not obtained.

From the comparison between Examples 1 to 6 and Comparative Examples 1 to 4, it is shown that it is preferred to use a polyethylenimine-based resin as the material of the ink-receiving layer (B). However, it is needless to say that as long as the material of the ink-receiving layer (B) satisfies the above relationship of peel strength, it is not limited to the polyethylenimine (B1).

The injection molding mold is used in the Examples and the Comparative Examples, but this is not limiting, and hollow molding such as direct blowing, stretch blowing, and injection blowing, compressed air molding, and vacuum molding can also be used.

The present invention has been described in detail using particular modes, but it is apparent to those skilled in the art that various changes and modifications can be made without departing from the intent and scope of the present invention. This application is based on Japanese Patent Application No. 2017-072025 filed on March 31, 2017, the entirety of which is incorporated by reference.

### Reference Signs List

- 1: in-mold molding label
- 2: labeled resin molded article
- 11: substrate layer (A)
- 12: ink-receiving layer (B)
- 13: printed layer (C)
- 21: resin molded article
- 31: second ink-receiving layer (b)
- 41: second printed layer (c)

## Claims

1. An in-mold molding label comprising:
a substrate layer (A) containing a thermoplastic resin;
an ink-receiving layer (B) containing a polyethylenimine-based polymer; and
a printed layer (C) formed using a printing method and containing a polyethylene-based resin as a main component, the printed layer (C) containing 50% by mass or more of the polyethylene-based resin;
in this order,
wherein the ratio between the thickness of the ink-receiving layer (B) and the thickness of the printed layer (C) is 1:20 to 2:1.

2. The in-mold molding label according to claim 1, wherein the thermoplastic resin is at least one thermoplastic resin selected from the group consisting of olefin-based resins, styrene-based resins, ester-based resins, amide-based resins, and polycarbonates.

3. The in-mold molding label according to claim 1 or 2, wherein the polyethylene-based resin comprises an ethylene-methacrylic acid copolymer.

4. The in-mold molding label according to any one of claims 1 to 3, further comprising a second printed layer (c) and a second ink-receiving layer (b) in this order on a surface of the substrate layer (A) opposite to a side on which the ink-receiving layer (B) is provided.

5. A labeled resin molded article obtained by affixing and integrating the in-mold molding label according to any one of claims 1 to 4 with a resin molded article by in-mold molding.

6. The labeled resin molded article according to claim 5, wherein the resin molded article comprises at least one thermoplastic resin selected from polyethylene-based resins and polystyrene resins.

7. The labeled resin molded article according to claim 5 or 6, wherein when the in-mold molding label is peeled from the labeled resin molded article, the in-mold molding label peels at an interface between the substrate layer (A) and the ink-receiving layer (B) or an interface between the ink-receiving layer (B) and the printed layer (C), and the resin molded article has at least the printed layer (C) on a resin molded article surface after the in-mold molding label is peeled.

## Patentansprüche

1. Etikett zum In-Mold-Formen, umfassend:
eine Substratschicht (A), die ein thermoplastisches Harz enthält;
eine Tintenannahmeschicht (B), die ein Polymer auf Polyethyleniminbasis enthält; und
eine gedruckte Schicht (C), die unter Verwendung eines Druckverfahrens ausgebildet ist und ein Harz auf Polyethylenbasis als Hauptbestandteil enthält, wobei die gedruckte Schicht (C) 50 Massen-% oder mehr des Harzes auf Polyethylenbasis enthält;
in dieser Reihenfolge,
wobei das Verhältnis zwischen der Dicke der Tintenannahmeschicht (B) und der Dicke der gedruckten Schicht (C) 1:20 bis 2:1 beträgt.

2. Etikett zum In-Mold-Formen nach Anspruch 1, wobei das thermoplastische Harz mindestens ein thermoplastisches Harz ist, das aus der Gruppe ausgewählt ist, die aus Harzen auf Olefinbasis, Harzen auf Styrolbasis, Harzen auf Esterbasis, Harzen auf Amidbasis und Polycarbonaten besteht.

3. Etikett zum In-Mold-Formen nach Anspruch 1 oder 2, wobei das Harz auf Polyethylenbasis ein Ethylen-Methacrylsäure-Copolymer umfasst.

4. Etikett zum In-Mold-Formen nach einem der Ansprüche 1 bis 3, ferner umfassend eine zweite gedruckte Schicht (c) und eine zweite Tintenannahmeschicht (b) in dieser Reihenfolge auf einer Oberfläche der Substratschicht (A) entgegengesetzt einer Seite, auf der die Tintenannahmeschicht (B) vorgesehen ist.

5. Etikettierter Harzformkörper, erhalten durch Anbringen und Integrieren des Etiketts zum In-Mold-Formen nach einem der Ansprüche 1 bis 4 an einem Harzformkörper durch In-Mold-Formen.

6. Etikettierter Harzformkörper nach Anspruch 5, wobei der Harzformkörper mindestens ein thermoplastisches Harz umfasst, das aus Harzen auf Polyethylenbasis und Harzen aus Polystyrolharzen ausgewählt ist.

7. Etikettierter Harzformkörper nach Anspruch 5 oder 6, wobei, wenn das Etikett zum In-Mold-Formen vom etikettierten Harzformkörper abgezogen wird, sich das Etikett zum In-Mold-Formen an einer Grenzfläche zwischen der Substratschicht (A) und der Tintenannahmeschicht (B) oder einer Grenzfläche zwischen der Tintenannahmeschicht (B) und der gedruckten Schicht (C) ablöst, und der Harzformkörper zumindest die gedruckte Schicht (C) auf der Oberfläche des Harzformkörpers hat, nachdem das Etikett zum In-Mold-Formen abgezogen ist.

## Revendications

1. Etiquette de moulage dans un moule comprenant :
une couche de substrat (A) contenant une résine thermoplastique ;
une couche de réception d'encre (B) contenant un polymère à base de polyéthylènimine ; et
une couche imprimée (C) formée en utilisant un procédé d'impression et contenant une résine à base de polyéthylène en tant que composant principal, la couche imprimée (C) contenant 50 % en masse ou plus de la résine à base de polyéthylène ;
dans cet ordre,
dans lequel le rapport entre l'épaisseur de la couche de réception d'encre (B) et l'épaisseur de la couche imprimée (C) est de 1:20 à 2:1.

2. Etiquette de moulage dans un moule selon la revendication 1, dans laquelle la résine thermoplastique est au moins une résine thermoplastique sélectionnée dans le groupe se composant de résines à base d'oléfine, résines à base de styrène, résines à base d'ester, résines à base d'amide, et polycarbonates.

3. Etiquette de moulage dans un moule selon la revendication 1 ou 2, dans laquelle la résine à base de polyéthylène comprend un copolymère éthylène-acide méthacrylique.

4. Etiquette de moulage dans un moule selon l'une quelconque des revendications 1 à 3, comprenant en outre une deuxième couche imprimée (c) et une deuxième couche de réception d'encre (b) dans cet ordre sur une surface de la couche de substrat (A) à l'opposé d'un côté sur lequel la couche de réception d'encre (B) est prévue.

5. Article moulé en résine étiqueté obtenu par l'apposition et l'intégration de l'étiquette de moulage dans un moule selon l'une quelconque des revendications 1 à 4 avec un article moulé en résine par moulage dans un moule.

6. Article moulé en résine étiqueté selon la revendication 5, dans lequel l'article moulé en résine comprend au moins une résine thermoplastique sélectionnée parmi des résines à base de polyéthylène et des résines de polystyrène.

7. Article moulé en résine étiqueté selon la revendication 5 ou 6, dans lequel, lorsque l'étiquette de moulage dans un moule est décollée de l'article moulé en résine étiqueté, l'étiquette de moulage dans un moule se décolle au niveau d'une surface entre la couche de substrat (A) et la couche de réception d'encre (B) ou d'une interface entre la couche de réception d'encre (B) et la couche imprimée (C), et l'article moulé en résine comporte au moins la couche imprimée (C) sur une surface d'article moulé en résine après que l'étiquette de moulage dans un moule est décollée.
